# EUROPÄISCHE PATENTSCHRIFT

(11) **EP 1 916 447 B1**
(45) Veröffentlichungstag und Bekanntmachung des Hinweises auf die Patenterteilung: **13.02.2013**
(21) Anmeldenummer: 07118263.8
(22) Anmeldetag: 11.10.2007
(51) Int. Cl.: F16H 3/12

(54) **Getriebebremseinrichtung für ein mehrstufiges Schaltgetriebe**
Gear brake device for a multi-stage manual transmission
Dispositif de freinage d'engrenage pour une boîte de vitesse

(30) Priorität: 24.10.2006 DE 102006050010
(43) Veröffentlichungstag der Anmeldung: 30.04.2008
(73) Patentinhaber: ZF Friedrichshafen AG, 88038 Friedrichshafen (DE)
(72) Erfinder: Steinborn, Mario, 88046, Friedrichshafen (DE); Cordt, Ramon, 88046, Friedrichshafen (DE)

(56) Entgegenhaltungen:
- WO-A1-2004/062957
- DE-A1- 2 634 057
- DE-A1- 10 214 478
- US-A- 3 667 309
- US-A- 4 523 493
- US-A1- 2004 144 190

## Beschreibung

Die Erfindung betrifft eine Getriebebremseneinrichtung für ein mehrstufiges Schaltgetriebe gemäß dem Oberbegriff des Patentanspruchs 1.

Moderne Schaltgetriebe sind im Allgemeinen so aufgebaut, dass mehrere auf einer Getriebewelle fest angeordnete Zahnräder mit jeweils zugeordneten, auf einer zweiten Getriebewelle frei drehbar angeordneten Zahnrädern in ständigem Eingriff sind. Zum Einlegen eines Ganges wird eines der Losräder mit der zugeordneten Getriebewelle drehgekoppelt, so dass das Antriebsdrehmoment von der ersten Getriebewelle auf die zweite Getriebewelle und von dort letztlich auf eine Getriebeabtriebswelle übertragen wird.

Um das Getriebe stoßfrei, geräusch- und verschleißarm zu schalten, ist bei Einlegen eines Ganges sicherzustellen, dass das zu koppelnde Losrad und die zugeordnete Getriebewelle eine zumindest annähernd gleiche Drehzahl haben. Für eine derartige Drehzahlsynchronisation können klein dimensionierte Reibkupplungen innerhalb des Getriebes verwendet werden, die vor dem Ineingriffkommen von formschlüssigen Koppelvorrichtungen in Reibeingriff gelangen und die beiden gegebenenfalls unterschiedlichen Drehzahlen aneinander angleichen.

Bei einem anderen Synchronisationsverfahren wird die antriebsseitige Getriebewelle, die entweder die Festräder oder die Losräder trägt, entweder durch Beschleunigen mittels des Antriebsmotors oder durch Abbremsen mittels einer Getriebebremse auf eine Drehzahl gebracht, bei der die Drehzahlen des jeweils zu koppelnden Losrades und der zugeordneten Getriebewelle im Wesentlichen gleich sind und die zugeordneten Elemente der formschlüssigen Koppelvorrichtung in Eingriff gebracht werden können, so dass auf diese Weise eine Synchronisation ohne Reibkupplungen möglich ist.

Definitionsgemäß sind vorliegend die mit dem Antriebsmotor über die Antriebskupplung bzw. Fahrkupplung bei einem Fahrzeug antriebsverbindbaren Getriebewellen unter dem Begriff "antriebsseitige Getriebewellenanordnung" zusammengefasst, während die mit den Antriebsrädern ständig verbundenen Wellen als "abtriebsseitige Wellen" bezeichnet werden.

Wie allgemein bekannt ist, muss zum Zurückschalten in einen kleineren Gang die antriebsseitige Getriebewellenanordnung auf eine höhere Drehzahl gebracht werden. Das erfolgt in der Weise, dass nach dem Auslegen des vorherigen Ganges die Anfahrkupplung geschlossen und die Motordrehzahl über eine Motorsteuerung erhöht wird, bis die zum Einlegen der formschlüssigen Kupplung erforderliche Drehzahl erreicht ist. Zum Hochschalten muss die Drehzahl der antriebsseitigen Getriebewellenanordnung verringert werden. Das erfolgt in der Weise, dass nach dem Auslegen des vorherigen Ganges die antriebsseitige Getriebewellenanordnung bei geöffneter Fahrkupplung mittels einer auf eine der Getriebewellen wirkende Getriebebremse abgebremst wird, bis die zum Kuppeln erforderliche Drehzahl erreicht ist.

Übliche Schaltgetriebe für Fahrzeuge umfassen beispielsweise eine über eine Fahrkupplung mit dem Antriebsmotor kuppelbare Eingangswelle, eine über eine feste Zahnradverbindung mit dieser antriebsverbundene Vorgelegewelle, die mehrere Festräder trägt, und eine mit den Fahrzeugantriebsrädem ständig antriebsgekoppelte Abtriebswelle, auf der die den Festrädem zugeordneten Losräder angeordnet sind, die jeweils einzeln mit der Abtriebswelle in der oben beschriebenen Weise drehfest verbindbar sind. Daneben sind auch Schaltgetriebe mit zwei Vorgelegewellen bekannt, welches eine besonders kurze Getriebebauart erlaubt. Anhand derartiger Schaltgetriebe wird die vorliegende Erfindung beispielhaft beschrieben, wobei jedoch darauf hingewiesen wird, dass die Erfindung auch bei anderen Getriebebauarten sinngemäß anwendbar ist.

Eine Synchronisation mittels des Antriebsmotors bzw. mittels einer Getriebebremse ist vor allem in einfacher Weise bei automatisierten Schaltgetrieben einsetzbar, die bereits über eine Motorsteuerung und eine Getriebesteuerung verfügen. Das Funktionsprinzip kann jedoch auch bei manuell zu schaltenden Getrieben angewendet werden.

Im Allgemeinen sind Getriebebremsen ausschließlich für ihre Synchronisationsfunktion ausgelegt. Es hat sich jedoch gezeigt, dass die Möglichkeiten einer Getriebebremse mit der Synchronisationsfunktion bei weitem nicht ausgelastet sind. So ist aus der DE 10 2004 045 828 A1 ein Verfahren bekannt, durch das die Funktion einer Getriebebremse erheblich erweitert werden kann. Gemäß diesem Verfahren wird die Steuerung und Regelung der Getriebebremse über die reine Getriebesynchronisation hinausgehend dazu verwendet, ohne bzw. nur mit minimalem zusätzlichem Hardwareaufwand zusätzliche antriebsstrangrelevante Funktionen durchzuführen. Die zusätzlichen Funktionen betreffen beispielsweise den Komfort und die Geschwindigkeit der Schaltvorgänge, den Schutz vor bzw. die Erkennung von Fehlerzuständen in Sensoren, der Fahrkupplung und der Motorsteuerung sowie die Vermeidung unerwünschter Zustände des Getriebes.

Für die Möglichkeiten einer Erweiterung der Funktionen einer Getriebebremseneinrichtung, wird ausdrücklich auf die DE 10 2004 045 828 A1 verwiesen. Damit die Getriebebremse die zusätzlichen Funktionen effektiv und schnell erfüllen kann, ist dabei vorgesehen, die Getriebebremse für ein Bremsmoment auszulegen, welches die Erfüllung der zusätzlichen Funktionen ermöglicht, wobei dieses Bremsmoment im Allgemeinen höher liegen wird als das für die reine Synchronisationsfunktion erforderliche Bremsmoment. Für die Drehzahlsynchronisation beim Hochschalten des Schaltgetriebes ist dieses Bremsmoment in der Regel viel zu hoch und müsste deshalb beispielsweise durch Pulsweitenmodulation gesteuert werden. Bei Funktionsvarianten, bei denen die in der oben genannten Druckschrift beschriebenen Zusatzfunktionen nicht benötigt werden, wäre die Getriebebremse deutlich überdimensioniert. Das würde bedeuten, dass die Getriebebremse für die bei weitem am häufigsten vorkommenden Anwendungsfälle, nämlich für ihren Einsatz als Synchronisationsbremse, nur einen Teil ihres möglichen Bremsmomentes aufbringen muss.

Die WO 2004/062957 A1 offenbart ein mehrstufiges Schaltgetriebe mit einer Getriebebremse auf einer Vorgelegewelle, gemäß dem Oberbegriff von Anspruch 1.

Vor diesem Hintergrund liegt der Erfindung die Aufgabe zugrunde, eine Getriebebremseneinrichtung für ein mehrstufiges Schaltgetriebe zu schaffen, bei der trotz der Möglichkeit, neben der Synchronisationsfunktion auch andere Funktionen zu erfüllen, eine Überdimensionierung der Getriebebremse vermieden wird.

Die Lösung dieser Aufgabe ergibt sich aus den Merkmalen des Hauptanspruches, während vorteilhafte Ausgestaltungen und Weiterbildungen der Erfindung den Unteransprüchen entnehmbar sind.

Der Erfindung liegt die Erkenntnis zugrunde, dass der gesamte konstruktive und bauliche Aufwand gegenüber der bekannten Getriebebremseneinrichtung geringer gehalten werden kann, wenn der der zahlenmäßig weitaus am häufigsten vorkommenden Synchronisationsfunktion dienende konstruktive und bauliche Aufwand gering gehalten werden kann.

Demnach geht die Erfindung aus von einer Getriebebremseneinrichtung für ein mehrstufiges Schaltgetriebe, umfassend eine einer antriebsseitigen Getriebewellenanordnung zugeordnete, über eine Getriebesteuerung steuerbare Getriebebremse.

Zur Lösung der gestellten Aufgabe ist eine Getriebebremseinrichtung nach Anspruch 1 vorgesehen, wobei neben der ersten Getriebebremse wenigstens eine weitere, auf die getriebeexterne Zapfwelle wirkende Zusatzbremse vorgesehen ist, die unabhängig von der ersten Getriebebremse von der Getriebesteuerung steuerbar ist.

Die Zusatzbremse wird so ausgelegt, dass sie bestimmte Zusatzfunktionen allein oder zusammen mit der ersten Getriebebremse ausführen kann. Sie kann dabei je nach den vorgesehenen Zusatzfunktionen über ein größeres Bremsmoment verfügen als die erste Getriebebremse.

In einer Ausgestaltung, welche nicht Inhalt der Erfindung ist, ist neben der ersten Getriebebremse eine Zusatzbremse innerhalb des Getriebegehäuses vorgesehen. Sie kann konstruktiv und baulich vollständig in das Getriebe integriert sein, so dass kein zusätzlicher Montageaufwand gegeben ist und kein eigenes Zusatzbremsengehäuse benötigt wird.

Die Erfindung sieht vor, dass wenigstens eine auf eine der Zapfwellen wirkende Zusatzbremse vorgesehen ist. Zapfwellen dienen beispielsweise dem Antrieb von Nebenaggregaten und sind ständig mit der Getriebewellenanordnung antriebsverbunden, oder sie dienen etwa bei Nutzfahrzeugen oder landwirtschaftlichen Fahrzeugen dem Antrieb von angehängten Geräten, beispielsweise Hydraulikaggregaten, wobei sie im allgemeinen über Kupplungen mit der Getriebewellenanordnung antriebsverbindbar sind. Mittels auf eine oder mehrere der Zapfwellen wirkender Zusatzbremsen kann ebenfalls die Drehzahl der Getriebewellenanordnung abgebremst werden, beispielsweise für den Fall, dass über die Zapfwellen große Drehmassen angetrieben werden, die ungebremst einen für einen Schaltvorgang zu lang andauernden Nachlauf hätten.

Gemäß einer weiteren Ausgestaltung der Erfindung ist vorgesehen, dass die erste Getriebebremse und die weitere(n) Zusatzbremse(n) jeweils nacheinander betätigbar sind. Das bedeutet beispielsweise, dass zunächst immer die Getriebebremse betätigt wird, und dass erst dann, wenn deren Bremskraft als nicht ausreichend detektiert wird, die wenigstens eine Zusatzbremse aktiviert wird.

Eine andere Ausgestaltung sieht vor, dass die erste Getriebebremse und die weitere(n) Zusatzbremse(n) jeweils gleichzeitig betätigt werden, wobei die vereinigte Bremskraft durch die Getriebesteuerung sowohl hinsichtlich ihrer Höhe als auch ihres zeitlichen Verlaufs gesteuert bzw. geregelt wird.

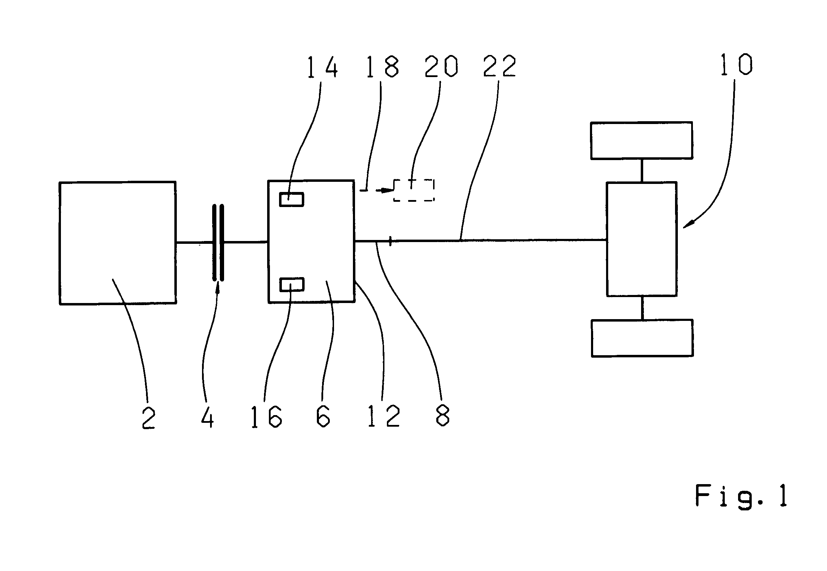

Die Erfindung lässt sich anhand eines Ausführungsbeispiels weiter erläutern. Dazu ist der Beschreibung eine Zeichnung beigefügt. In dieser zeigt die Figur schematisch den Antriebsstrang eines Kraftfahrzeuges, wobei das Schaltgetriebe eine interne Getriebebremse sowie wahlweise eine interne und/oder eine externe Zusatzbremse aufweist.

Die Figur zeigt demnach einen Antriebsstrang eines Kraftfahrzeuges mit einem Antriebsmotor 2, einer Fahrkupplung 4, einem dieser nachgeordneten Schaltgetriebe 6 und einer mit der Abtriebswelle 8 des Schaltgetriebes 6 über eine Kardanwelle 22 antriebsverbundene Achsanordnung 10. Innerhalb des Getriebegehäuses 12 ist in an sich bekannter Weise eine interne Getriebebremse 14 angeordnet, die auf eine Welle, beispielsweise eine Vorgelegewelle einer antriebsseitigen Getriebewelleanordnung wirken kann.

Innerhalb des Getriebegehäuses 12 ist gemäß der Erfindung außerdem eine Zusatzbremse 16 vorgesehen, die bei einer Bremsbetätigung ebenfalls auf eine Getriebewelle der antriebsseitigen Getriebewellenanordnung wirkt. Wie weiter vorne ausgeführt wurde, kann für den Fall, dass das Schaltgetriebe über zwei Vorgelegewellen verfügt, die Getriebebremse auf eine Vorgelegewelle und die Zusatzbremse auf die andere Vorgelegewelle wirken, um die Bremslast zu verteilen.

Wie die Figur weiter erkennen lässt, kann alternativ oder zusätzlich zu der Zusatzbremse 16 eine auf eine aus dem Getriebegehäuse 12 herausgeführte Zapfwelle 18 für den Antrieb eines Nebenaggregates oder eines angehängten Gerätes wirkende zweite Zusatzbremse 20 vorgesehen sein, deren genaue Aufgaben und Funktionen vorne beschrieben wurden.

### Bezugszeichen

- 2: Antriebsmotor
- 4: Fahrkupplung
- 6: Schaltgetriebe
- 8: Abtriebswelle
- 10: Achsanordnung
- 12: Getriebegehäuse
- 14: Interne Getriebebremse
- 16: Erste Zusatzbremse
- 18: Zapfwelle
- 20: Zweite Zusatzbremse
- 22: Kardanwelle

## Patentansprüche

1. Getriebebremseneinrichtung für ein mehrstufiges Schaltgetriebe mit einer antriebsseitigen Getriebewellenanordnung und mit wenigstens einer mit der antriebsseitigen Getriebewellenanordnung antriebsverbundenen bzw. antriebsverbindbaren getriebeexternen Zapfwelle (18), wobei die Getriebebremseneinrichtung eine der antriebsseitigen Getriebewellenanordnung zugeordnete, über eine Getriebesteuerung steuerbare, für eine Synchronisationsfunktion ausgelegte, erste Getriebebremse umfasst, wobei die antriebsseitige Getriebewellenanordnung zumindest eine Vorgelegewelle umfasst, auf welche die erste Getriebebremse wirkt, **dadurch gekennzeichnet, dass** neben der ersten Getriebebremse (14), wenigstens eine weitere, auf die getriebeexterne Zapfwelle (18) wirkende Zusatzbremse (16, 20) vorgesehen ist, die unabhängig von der ersten Getriebebremse (14) von der Getriebesteuerung steuerbar ist.

2. Getriebebremseneinrichtung nach Anspruch 1, dadurch **gekennz eichnet,** dass die erste Getriebebremse (14) und die weiteren Zusatzbremsen (16, 20) jeweils nacheinander betätigbar sind.

3. Getriebebremseneinrichtung nach zumindest einem der Ansprüche 1 bis 2, **dadurch gekennzeichnet, dass** die erste Getriebebremse (14) und die weiteren Zusatzbremsen (16, 20) jeweils gleichzeitig hinsichtlich ihrer Bremskraft gesteuert betätigbar sind.

## Claims

1. Gear brake device for a multiple-stage manual transmission having a drive-side transmission shaft arrangement and having at least one power take-off shaft (18) which is outside the transmission and is drive-connected or can be drive-connected to the drive-side transmission shaft arrangement, the gear brake device comprising a first gear brake which is assigned to the drive-side transmission shaft arrangement, can be controlled via a transmission controller and is designed for a synchronization function, the drive-side transmission shaft arrangement comprising at least one idler shaft, on which the first gear brake acts, **characterized in that**, in addition to the first gear brake (14), at least one further additional brake (16, 20) is provided which acts on the power take-off shaft (18) outside the transmission and can be controlled by the transmission controller independently of the first gear brake (14).

2. Gear brake device according to Claim 1, **characterized in that** the first gear brake (14) and the further additional brakes (16, 20) can be actuated in each case one after another.

3. Gear brake device according to at least either of Claims 1 and 2, **characterized in that** the first gear brake (14) and the further additional brakes (16, 20) can be actuated in each case at the same time in a controlled manner with regard to their brake force.

## Revendications

1. Dispositif de freinage de boîte de vitesses pour une boîte de vitesse à plusieurs étages comprenant un agencement d'arbre de boîte de vitesses du côté de l'entraînement et comprenant au moins un arbre de prise de force (18) externe à la boîte de vitesses relié par entraînement ou pouvant être relié par entraînement à l'agencement d'arbre de boîte de vitesses du côté de l'entraînement, le dispositif de freinage de boîte de vitesses comportant un premier frein de boîte de vitesses associé à l'agencement d'arbre de boîte de vitesses du côté de l'entraînement, pouvant être commandé au moyen d'une commande de boîte de vitesses et conçu pour une fonction de synchronisation, l'agencement d'arbre de boîte de vitesses du côté de l'entraînement comportant au moins un arbre intermédiaire sur lequel agit le premier frein de boîte de vitesses, **caractérisé en ce qu'**en plus du premier frein de boîte de vitesses (14), au moins un frein auxiliaire (16, 20) supplémentaire agissant sur l'arbre de prise de force (18) externe à la boîte de vitesses est prévu, lequel frein auxiliaire peut être commandé par la commande de boîte de vitesses indépendamment du premier frein de boîte de vitesses (14).

2. Dispositif de freinage de boîte de vitesses selon la revendication 1, **caractérisé en ce que** le premier frein de boîte de vitesses (14) et les freins auxiliaires supplémentaires (16, 20) peuvent être actionnés respectivement successivement.

3. Dispositif de freinage de boîte de vitesses selon au moins l'une des revendications 1 et 2, **caractérisé en ce que** le premier frein de boîte de vitesses (14) et les freins auxiliaires supplémentaires (16, 20) peuvent être actionnés respectivement simultanément de manière commandée en ce qui concerne leur force de freinage.
